# EUROPÄISCHE PATENTSCHRIFT

(11) **EP 1 614 593 B1**
(45) Veröffentlichungstag und Bekanntmachung des Hinweises auf die Patenterteilung: **19.12.2007**
(21) Anmeldenummer: 05014829.5
(22) Anmeldetag: 08.07.2005
(51) Int. Cl.: B60R 25/00

(54) **Schliesssystem, insbesondere für ein Kraftfahrzeug**
Locking system, in particular for a motor vehicle
Système de verouillage, notamment pour véhicule à moteur

(30) Priorität: 10.07.2004 DE 102004033416
(43) Veröffentlichungstag der Anmeldung: 11.01.2006
(73) Patentinhaber: Marquardt GmbH, 78604 Rietheim-Weilheim (DE)
(72) Erfinder: Hipp, Uwe, 72514 Engelswies (DE); Stehle, Wolfgang, 78603 Renquishausen (DE); Mattes, Johannes, 78567 Fridingen (DE); Schwalm, Uwe, 78532 Tuttlingen-Möhringen (DE)
(74) Vertreter: Otten, Herbert

(56) Entgegenhaltungen:
- EP-A- 0 980 800
- DE-A1- 10 202 330
- DE-A1- 19 752 029
- US-A1- 2001 038 328

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloßsysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für Signale, die insbesondere mittels einer elektromagnetischen Trägerwelle übertragen werden. Insbesondere ist im bestimmungsgemäßen Betrieb zwischen dem Schlüssel und der Steuereinrichtung wenigstens ein Signal als codiertes Betriebssignal zur Authentikation des Schlüssels übertragbar, so daß nach positiver Auswertung des übertragenen Betriebssignals und damit bei berechtigtem Schlüssel eine Änderung des Zustandes der Steuereinrichtung bewirkbar ist.

Ein weiteres Schließsystem für die Zugangsberechtigung in einem Kraftfahrzeug, das aus einem tragbaren elektronischen Schlüssel und einem Steuergerät im Kraftfahrzeug besteht, geht aus der US 2001/0038328 A1 hervor. Mittels manuell betätigbarer Tasten am Schlüssel können vom Benutzer entsprechende Funksignale ausgelöst werden. Das Steuergerät im Kraftfahrzeug besitzt eine Einrichtung zur Messung der Feldstärke des empfangenen Funksignals, wobei die Feldstärke zum Abstand des Schlüssels vom Kraftfahrzeug korrespondiert. In Abhängigkeit vom ermittelten Abstand werden bei Empfang des Funksignals unterschiedliche Funktionen vom Steuergerät ausgelöst.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, daß der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt.

Ein Schließsystem mit Keyless-Funktionalität ist aus der EP 0 980 800 A2 bekannt. Das Schließsystem umfaßt eine im Kraftfahrzeug befindliche Sende- und Empfangseinheit mit Antennen und einen tragbaren Codegeber. Zur Authentikation des Codegebers wird ein Betriebssignal zwischen der Sende- und Empfangseinheit und dem Codegeber übertragen, wobei das Betriebssignal aus einem von der Sende- und Empfangseinheit gesendeten Fragesignal sowie einem vom Codegeber zurückgesandten Antwortsignal besteht. Das Fragesignal wird mehrfach mit geänderter Sendeleistung oder über verschiedene Antennen ausgesendet. Der Codegeber besitzt eine Meßeinrichtung zur Messung der Empfangsleistung für das Fragesignal. Der mittels der Meßeinrichtung ermittelte Wert für die Empfangsleistung wird dem Antwortsignal hinzugefügt. Zur Erhöhung der Diebstahlsicherheit wird das Antwortsignal im Hinblick auf die veränderte Empfangsleistung ausgewertet, da gleichbleibende Antwortsignale auf einen manipulierten Codegeber hindeuten.

Für die Keyless-Funktionalitäten muß ermittelt werden, wo sich die zweite Einrichtung befindet. Beispielsweise muß der Schlüssel zum Start des Kraftfahrzeugs in dessen "Innenbereich" und für das Verschließen sowie Öffnen des Kraftfahrzeugs in dessen "Außenbereich" befindlich sein. Zur Plausibilitätskontrolle wird zwar die Empfangsleistung bestimmt, eine Ortsbestimmung für den Codegeber erfolgt jedoch bei dem Schließsystem nach der EP 0 980 800 A2 nicht. DE 10 202 330 offenbart ein Gattungsgemäßes schließsystem nach dem Oberbegriff des Anspruchs 1. Um die Diebstahlsicherheit weiter zu erhöhen soll eine eindeutige Zuordnung des Schlüssels zur bedienten Stelle des Fahrzeugs möglich sein. Beispielsweise soll die Türöffnung beim KeylessEntry nur dann erfolgen, wenn sich der Schlüssel an der Seite des Kraftfahrzeugs befindet, an der der Türgriff durch den Benutzer betätigt wird, was beim bekannten Schließsystem nicht ermöglicht ist.

In schlüssellosen Zugangs- bzw. Fahrberechtigungssystemen gibt es somit verschiedene Bedienstellen. Diese befinden sich beispielsweise an Fahrer-, Beifahrerseite, Heck und im Innenraum. Die Bedienphilosophie kann so sein, daß nur dann, wenn sich der Identifikationsgeber an der bedienten Stelle befindet, die gewünschte Aktion ausgeführt werden soll. Dies ist ein zusätzlicher Schutz gegen Mißbrauch. Deshalb ist es notwendig eine eindeutige Zuordnung zwischen der bedienten Stelle am Fahrzeug und der Position des Identifikationsgebers treffen zu können.

Der Erfindung liegt die Aufgabe zugrunde, die Diebstahls- und/oder Funktionssicherheit für das mit "Keyless"-Funktionalität ausgestattete Schließsystem zu steigern.

Diese Aufgabe wird bei einem gattungsgemäßen Schließsystem durch die kennzeichnenden Merkmale des Anspruchs 1 gelöst.

Die erste Einrichtung sendet ein erstes elektromagnetisches Signal für die zugehörige, beispielsweise als Transponder- und/oder Funkschlüssel ausgebildete zweite Einrichtung als Wecksignal. Dadurch wird die zweite Einrichtung aus einem Ruhezustand mit verringertem Energiebedarf in einen aktivierten Zustand für den bestimmungsgemäßen Betrieb übergeführt. Die erste Einrichtung sendet nach Aussenden des ersten elektromagnetischen Signals ein drittes elektromagnetisches Signal als Bereichsabgrenzungssignal, derart daß die zweite Einrichtung deren Standort in Bezug auf die erste Einrichtung am und/oder im Kraftfahrzeug bestimmen kann. Beim erfindungsgemäßen Schließsystem ist wenigstens zwei Bereichen des Kraftfahrzeugs ein Sender der ersten Einrichtung sowie jedem dieser Bereiche des Kraftfahrzeugs ein Betätigungsorgan zur Auslösung eines der Signale der ersten Einrichtung zugeordnet. Zur Verbesserung der Standortbestimmung wird die Sendeenergie des Bereichsabgrenzungssignals desjenigen Senders, der dem Bereich zugeordnet ist, an dem die Betätigung erfolgt ist, verändert. Mittels dieser durch den Betätigungsort abhängigen Ansteuerung der Sendeenergie kann dann die Position der zweiten Einrichtung, insbesondere auch an den vom jeweiligen Kraftfahrzeugtyp abhängigen kritischen Grenzbereichen, zuverlässig bestimmt werden. Dadurch lassen sich wiederum die Keyless-Funktionalitäten unter vorteilhafter Erhöhung der Diebstahlsicherheit gezielt auslösen.

Verallgemeinernd läßt sich für das Verfahren zum Betrieb des erfindungsgemäßen schlüssellosen Zugangs- bzw. Fahrberechtigungssystem nachfolgendes sagen. Das Verfahren gestattet die eindeutige Zuordnung der Bedienstelle und/oder Position des Identifikationsgebers im schlüssellosen Zugangs- bzw. Fahrberechtigungssystem, insbesondere beim Einsatz im Kraft- und/oder Nutzfahrzeug. Hierzu gibt es bei dem erfindungsgemäßen schlüssellosen Zugangs- bzw. Fahrberechtigungssystem einen oder mehrere Kommunikations-Kanäle zur Datenübertragung. Zur Ortserkennung des Identifikationsgebers als zweite Einrichtung werden mehrere niederfrequente Felder betrachtet. Zur eindeutigen Zuordnung sendet nun die bediente Stelle nicht ihr typisches Feld sondern ein speziell codiertes Feld aus, welches sich durch andere Leistung, Codierung, Frequenz, Modulation o. dgl. auszeichnet. Über diesen Kommunikationskanal wird dem Identifikationsgeber zusätzlich die Information übermittelt, welches die Bedienstelle war. Aus diesen beiden Informationen kann der Identifikationsgeber eindeutig seine Position am Fahrzeug bestimmen und in bestimmungsgemäßer Weise weiter reagieren.

Weitere Ausgestaltungen der Erfindung sind Gegenstand der Unteransprüche.

Es hat sich beim bisherigen Schließsystem vor allem herausgestellt, daß das elektromagnetische Feld zum Wecken der zweiten Einrichtung größer ist als dasjenige des Bereichsabgrenzungssignals. Damit gibt es Bereiche, in denen die zweite Einrichtung zwar geweckt, jedoch anschließend deren Standort nicht bestimmen kann. In ergänzender Ausgestaltung der Erfindung wird dieser Situation dadurch begegnet, daß die Veränderung der Sendeenergie des Bereichsabgrenzungssignals durch Vergrößern von dessen Intensität erfolgt.

Zur Bestimmung des Standorts wertet die zweite Einrichtung die Feldsituation für die empfangenen Bereichsabgrenzungssignale zeitlich und/oder quantitativ aus. In einfacher und kostengünstiger Weise ist hierzu in der zweiten Einrichtung ein Mittel zur Messung der Feldstärke des von der ersten Einrichtung übertragenen Bereichsabgrenzungssignals angeordnet. Die Standortbestimmung kann dann anhand der gemessenen Intensitäten der Bereichsabgrenzungssignale erfolgen.

Zweckmäßigerweise ist das Mittel zur Messung der Feldstärke als ein integrierter Baustein ausgestaltet. Dieser Baustein erzeugt ein in funktioneller Abhängigkeit zur gemessenen Feldstärke stehendes sogenanntes RSSI(Radio Signal Strength Indicator)-Signal, das dann in einfacher Weise zur eigentlichen Standortbestimmung herangezogen werden kann. Besonders geeignet zur Weiterverarbeitung des RSSI-Signals ist ein Mikroprozessor, wobei es sich dabei um den in der zweiten Einrichtung für deren Betrieb bereits vorhandenen Mikroprozessor handeln kann. Das RSSI-Signal selbst kann beispielsweise in proportionaler oder logarithmischer Abhängigkeit zur gemessenen Feldstärke stehen.

Um eine einfache und schnelle Arbeitsweise für die Standortbestimmung zu gewährleisten, läßt sich ein Schwellwert in der zweiten Einrichtung festlegen. Dann können die aus den Bereichsabgrenzungssignalen erzeugten RSSI-Signale jeweils miteinander und/oder mit dem Schwellwert verglichen werden. Somit läßt sich dann aufgrund dieser Größenvergleiche und/oder mittels logischer, insbesondere boole'scher Verknüpfungen der Ergebnisse dieser Vergleiche der Standort bestimmen.

In einer Weiterbildung kann das erste elektromagnetische Signal eine Art von Weck-Pattern enthalten, in dem sich Informationen zum jeweiligen Kraftfahrzeug, zum zugehörigen Schließsystem o. dgl. übertragen lassen. Damit ist ein spezifisches Aufwecken der jeweils zum Schließsystem zugehörigen zweiten Einrichtung ermöglicht, indem die zweite Einrichtung lediglich bei einem vorbestimmten Weck-Pattern in den aktivierten Zustand übergeht. Der Standort der zweiten Einrichtung in Bezug auf die erste Einrichtung am und/oder im Kraftfahrzeug wird anschließend mit einem vierten Signal als Rückantwortsignal von der zweiten zur ersten Einrichtung gesendet. Sind diese Signale erfolgreich übermittelt, so wird schließlich die Authentikation der zweiten Einrichtung mittels weiterer fünfter Signale als codierte Betriebssignale durchgeführt. Sind somit die für das Wecken sowie die Bereichsabgrenzung notwendigen Vorbedingungen nicht erfüllt, so wird die an sich aufwendige Authentikation gar nicht durchgeführt, womit eine effizientere Betriebsweise für das Schließsystem ermöglicht ist. Das der Authentikation dienende fünfte elektromagnetische Signal kann schließlich in einer die Diebstahlsicherheit erhöhenden bidirektionalen Kommunikation bestehend aus mehreren Teilsignalen zwischen der ersten und der zweiten Einrichtung übertragen werden.

Zwischen dem Weck- und dem Bereichsabgrenzungssignal kann von der ersten Einrichtung ein zweites elektromagnetisches Signal als Selektionssignal gesendet werden, das insbesondere eine Information zur Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Ergänzend oder auch alternativ kann bereits im Wecksignal diese Kennung zur Codierung des Kraftfahrzeug-Typs enthalten sein, so daß lediglich demselben Kraftfahrzeug-Typ zugeordnete zweite Einrichtungen aktiviert werden und/oder im aktivierten Zustand verbleiben sowie im aktivierten Zustand befindliche, nicht zugehörige zweite Einrichtungen in den Ruhezustand zurückgeführt werden. Dadurch ist jeweils eine weitere Steigerung in der Effizienz der Betriebsweise des Schließsystems möglich.

Besonders bevorzugt ist, für das Weck- und/oder das Bereichsabgrenzungssignal ein induktives Signal zu verwenden, indem die Trägerwelle für das erste Signal und/oder für das dritte Signal und/oder für Teilsignale des dritten Signals eine im induktiven, niederfrequenten (NF-)Bereich liegende Frequenz aufweist. Aufgrund der begrenzten Reichweite eines induktiven Signals läßt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Beispielsweise kann die Frequenz für die NF-Trägerwelle in etwa 20 kHz betragen.

Zweckmäßigerweise besitzt hierfür die erste Einrichtung mehrere induktive Sender beziehungsweise als induktive Sender dienende Spulen und die zweite Einrichtung einen induktiven Empfänger. Jeweils ein induktiver Sender und/oder eine Spule ist der linken Kraftfahrzeugseite sowie der rechten Kraftfahrzeugseite zugeordnet.

Zur Auslösung des Wecksignals bietet sich ein durch den Benutzer manuell betätigbarer Schalter und/oder Sensor an. Der für die Zugangsberechtigung zum Kraftfahrzeug dienende, dem jeweiligen Sender zugeordnete elektrische Schalter bzw. Sensor, der als kapazitiv arbeitender Näherungssensor ausgestaltet sein kann, ist beispielsweise im linken sowie rechten Türgriff des Kraftfahrzeugs angeordnet. Der Start/Stop-Schalter bzw. Sensor für die Fahrberechtigung des Kraftfahrzeugs ist beispielsweise am Gangwahlhebel, am Zündschloß, im Armaturenbrett oder in der Mittelkonsole angeordnet.

Die mit der Erfindung erzielten Vorteile bestehen insbesondere darin, daß der Standort der zweiten Einrichtung in Bezug auf die erste Einrichtung in einfacher Art und Weise bestimmt und für die Ausführung der Keyless-Funktionalitäten berücksichtigt werden kann. Beispielsweise ist ein gezieltes Öffnen der Fahrzeugtür, an der sich der Identifikationsgeber befindet, möglich. Es wird dadurch einem Fehlverhalten des Schließsystems vorgebeugt und dessen Betrieb fehlersicherer, so daß folglich eine Verbesserung der Positionsbestimmung des Schlüssels in einem KeylessEntry/Go-Fahrzeug erzielt wird. Außerdem wird auch in bisher kritischen Grenzbereichen, beispielsweise in der Nähe der Außenhaut der Fahrzeugkarosserie entsprechend einer Innen/Aussen-Abgrenzung für den Schlüssel eine verbesserte Genauigkeit erzielt.

Somit arbeitet das Schließsystem zuverlässig sowie funktions-/betriebssicher und bietet einen hohen sowie auch mehr Komfort für den Benutzer. Zudem ist das Schließsystem manipulationssicher und fehlertolerant, was die Diebstahlsicherheit sowie den Mißbrauchsschutz für das Kraftfahrzeug erhöht. Trotz dieser Verbesserungen ist das Schließsystem kostengünstig herzustellen.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das Schließsystem im Kraftfahrzeug,
- Fig. 3: ein schematisches Blockschaltbild des ID-Gebers mit einem Diagramm zur Übertragung der Signale und
- Fig. 4: eine Prinzipskizze zur Bereichsabgrenzung, wobei sich die zweite Einrichtung an verschiedenen Stellen befindet.

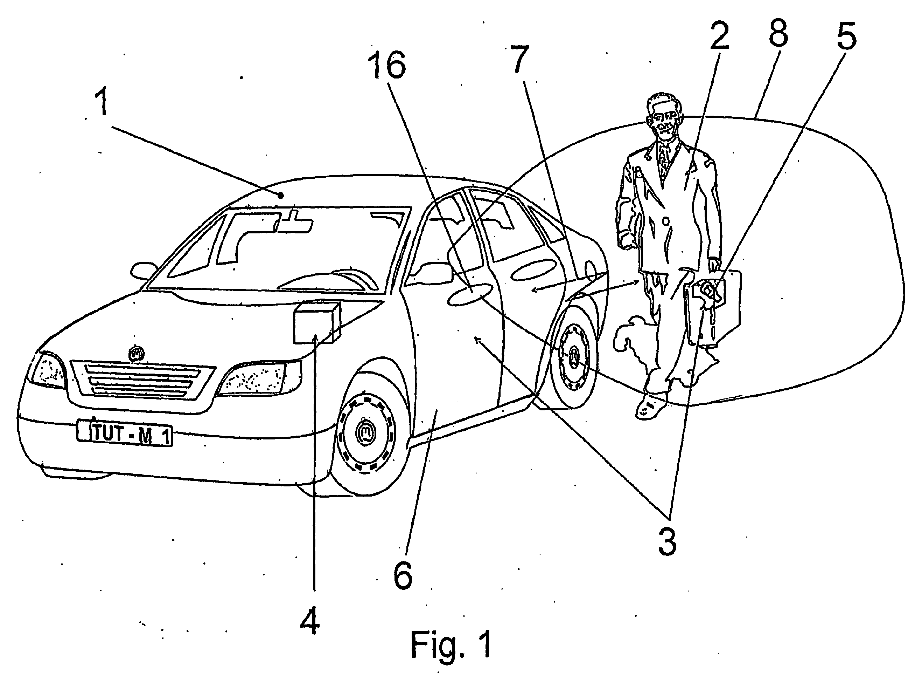

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

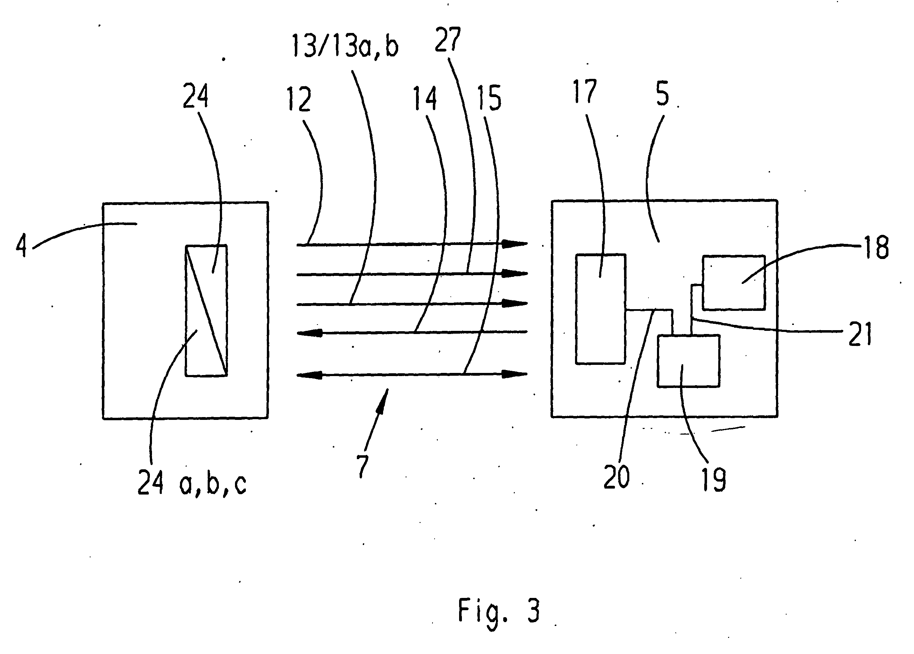

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

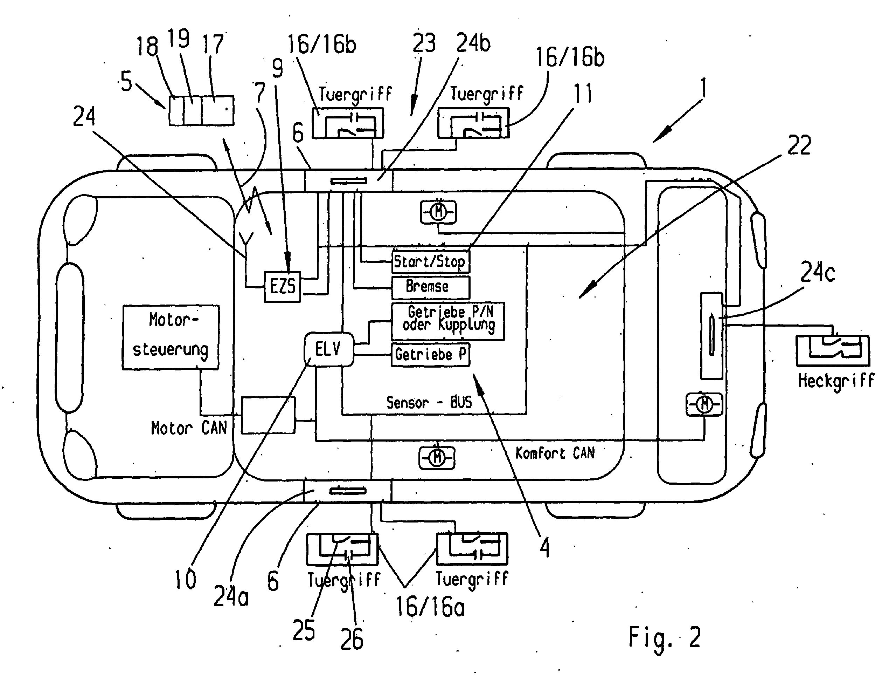

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 oder der Lenkradverriegelung 10, die in Fig. 2 zu sehen sind. Ebensogut kann ein sonstiges funktionsrelvantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters oder Sensors vom Benutzer 2 ausgelöst. Für die Zugangsberechtigung kann es sich beispielsweise um die manuelle Betätigung des Türgriffs 16 handeln, wie in Fig. 2 zu sehen ist. Hierzu ist im Türgriff 16 des Kraftfahrzeugs 1 ein elektrischer Schalter 25 angeordnet. Wird ein beispielsweise kapazitiv arbeitender Näherungssensor 26 verwendet, wie ebenfalls in Fig. 2 am Türgriff 16 gezeigt ist, so kann vom Sensor 26 die Annäherung der Hand des Benutzers 2 an den Türgriff 16 detektiert werden. Für die Fahrberechtigung befindet sich ein vom Benutzer 2 manuell betätigbarer Start/Stop-Schalter 11 im Kraftfahrzeug 1. Zweckmäßigerweise ist der Start/Stop-Schalter 11 am Gangwahlhebel, am Zündschloß 9, im Armaturenbrett, in der Mittelkonsole o. dgl. im Kraftfahrzeug 1 angeordnet.

Die Funktionsweise des erfindungsgemäßen Schließsystems 3 soll nun anhand der Fig. 3 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Dadurch wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelteten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Das Wecksignal 12 kann beispielsweise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 27 zur zweiten Einrichtung 5 als Selektionssignal, wie näher anhand von Fig. 3 zu erkennen ist. Das zweite Signal 27 enthält eine Information über die nähere Identität des Kraftfahrzeugs 1. Dadurch wird bewirkt, daß lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentikation auf, so daß bei Vorhandensein beider Linien im Wirkbereich 8 lediglich eine Authentikation mit der ranghöheren Linie, die entsprechend ausgewählt wird, durchzuführen ist. Das Selektionssignal 27 kann nun zusätzlich eine Information zu den der ersten Einrichtung 4 zugeordneten Linien enthalten, um dem Schließsystem 3 gegebenenfalls eine Auswahl für die Authentikation zu gestatten.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke wenigstens eines von der ersten Einrichtung 4 übertragenen Signals angeordnet. Das Mittel 19 zur Messung der Feldstärke mißt die Feldstärke beziehungsweise die Intensität eines der übertragenen Signale, und zwar des Bereichsabgrenzunssignals 13. Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 jeweils empfangene Signal 13 und erzeugt an seinem RSSI-Ausgang 21 ein in funktioneller Abhängigkeit zur Feldstärke des Signals 13 stehendes RSSI-Signal. Beispielsweise kann das RSSI-Signal proportional oder logarithmisch zur Feldstärke des Signals 13 abhängig sein.

Zur Standortbestimmung unter Verwendung des RSSI-Signals enthält die erste Einrichtung 4 wenigstens zwei Sender 24a, 24b mit zugehörigen Empfängern, wie in Fig. 2 zu sehen ist. Die zwei Sender 24a, 24b sind verschiedenen Bereichen beziehungsweise Seiten des Kraftfahrzeugs 1 zugeordnet, und zwar befindet sich der Sender 24a in der linken und der Sender 24b in der rechten Autotüre 6. Desweiteren ist jedem dieser Bereiche des Kraftfahrzeugs 1 ein Betätigungsorgan 16 zur Auslösung eines der Signale der ersten Einrichtung 4 zugeordnet, und zwar vorliegend der linke Türgriff 16a in der linken sowie der rechte Türgriff 16b in der rechten Autotüre 6 als jeweiliges Betätigungsorgan. Die beiden Sender 24a, 24b der ersten Einrichtung 4 senden nacheinander jeweils ein Bereichsabgrenzungssignal 13a, 13b, beispielsweise zunächst der Sender 24a und anschließend der Sender 24b. Diese beiden Bereichsabgrenzungssignale 13a, 13b werden dann vom Sender/Empfänger 17 der zweiten Einrichtung 5 empfangen und daraus entsprechende RSSI-Signale gebildet. Diese am RSSI-Ausgang 21 anliegenden RSSI-Signale der von den beiden Sendern 24a, 24b empfangenen Signale 13a, 13b werden dann zur Standortbestimmung der zweiten Einrichtung 5 mit Hilfe des Mikroprozessors 18 verwendet. Insbesondere läßt sich somit zur Auslösung der jeweiligen KeylessEntry/Go-Funktionalität feststellen, ob die zweite Einrichtung 5 im Außenraum 23 oder im Innenraum 22 des Kraftfahrzeugs 1 befindlich ist. Ergänzend kann noch ein weiterer Sender 24c als dritter Sender der ersten Einrichtung 4 im Heckbereich des Kraftfahrzeugs 1 angeordnet sein, um so die Funktionssicherheit für die jeweilige KeylessEntry/Go-Funktionalität weiter zu verbessern.

Besonders bevorzugt ist, daß die Trägerwellen für das erste Signal 12 als Wecksignal und/oder für das dritte Signal 13 als Bereichsabgrenzungsignal beziehungsweise für die Teilsignale 13a, 13b des dritten Signals 13 eine im induktiven (NF-)Bereich liegende Frequenz aufweisen. Insbesondere kann diese Frequenz 20 kHz betragen. Vorteilhafterweise weist ein solches induktives Signal bereits eine begrenzte Reichweite auf. Dadurch wird erreicht, daß die zweite Einrichtung 5 lediglich dann aktiviert wird, wenn sie im Innenraum 22 des Kraftfahrzeugs 1 oder in einem der Wirkbereiche 8 im Außenraum 23 am Kraftfahrzeug 1 befindlich ist, womit Störungen und/oder Sicherheitslücken durch Überreichweiten vermieden sind. In diesem Fall können zum einen Spulen als der linken beziehungsweise rechten Kraftfahrzeugseite zugeordnete, induktive Sender 24a, 24b verwendet werden und zum anderen besitzt die zweite Einrichtung 5 einen induktiven Empfänger 17.

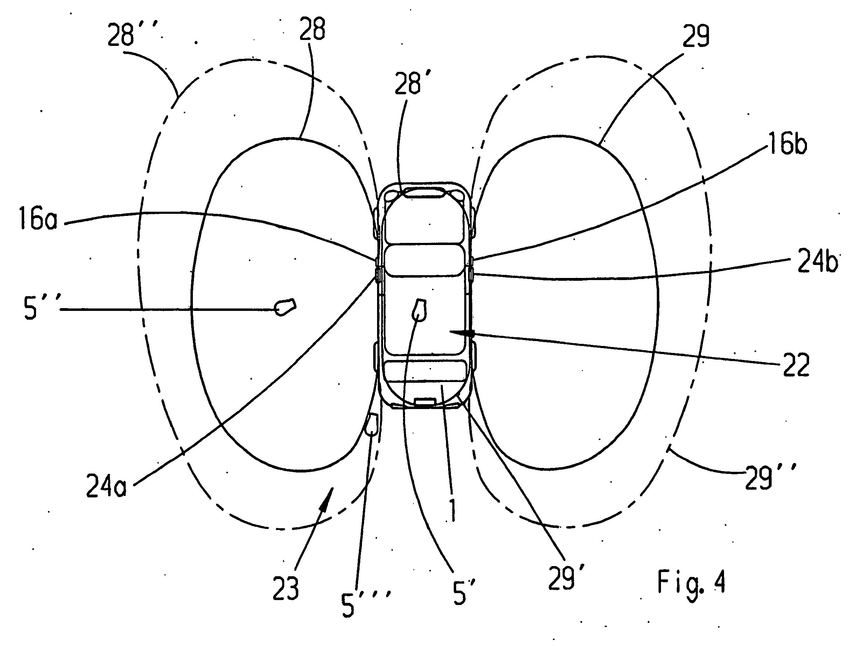

In Fig. 4 ist die Reichweite am Kraftfahrzeug 1 des vom linken Sender 24a abgestrahlten Feldes 28, 28' für das Bereichsabgrenzungssignal 13a sowie des vom rechten Sender 24b abgestrahlten Feldes 29, 29' für das Bereichsabgrenzungssignal 13b zu sehen. Hervorzuheben ist, daß die Reichweite der beiden Felder 28', 29' im wesentlichen auf den Innenraum 22 begrenzt ist. Wie man sieht, genügt es für die Erkennung des Innenraums 22 zu überprüfen, ob die zweite Einrichtung (in der Zeichnung mit dem Bezugszeichen 5' bezeichnet) in der Schnittmenge für die beiden Felder 28', 29' befindlich ist. Hierzu wird ein Schwellwert S für das RSSI-Signal bestimmt und dann im Mikroprozessor 18 überprüft, ob das RSSI-Signal RSSI(links) für das Feld 28' vom linken Sender 24a sowie das RSSI-Signal RSSI(rechts) für das Feld 29' vom rechten Sender 24b jeweils den Schwellwert S überschreiten, also die Bedingung
RSSI(links) > S und RSSI(rechts) > S
erfüllt ist. Befindet sich die zweite Einrichtung 5 im Außenraum 23, so ist offensichtlich eines der beiden RSSI-Signale RSSI(links) oder RSSI(rechts) kleiner als der Schwellwert. Befindet sich beispielsweise die zweite Einrichtung an der linken Seite im Außenraum 23 (zweite Einrichtung mit Bezugszeichen 5" bezeichnet), so ist die Bedingung
RSSI(links) > S und RSSI(rechts) <= S
erfüllt. Für die rechte Seite gilt
RSSI(links) <= S und RSSI(rechts) > S
entsprechend.

Aufgrund von Abschattungen am Kraftfahrzeug 1 sowie sonstigen Einflüssen und bei einem gegenüber der Bereichsabgrenzung größeren Weckfeld existieren jedoch Grenzbereiche, in denen eine Links-/Rechts-Erkennung der zweiten Einrichtung auf diese Weise nicht sicher ermöglicht ist (man vergleiche beispielsweise hierzu die zweite Einrichtung 5''' in Fig. 4). Dadurch ist jedoch die Türöffnung an der bedienten Seite, wie an sich aufgrund der Diebstahlsicherheit gewünscht, nicht sicher durchzuführen. Um hier Abhilfe zu schaffen, wird die Sendeenergie beziehungsweise die Intensität des Bereichsabgrenzungssignals 13a, 13b desjenigen Senders 24a, 24b verändert, der dem Bereich zugeordnet ist, an dem die Betätigung des Betätigungsorgans 16a, 16b erfolgt ist. Bevorzugterweise erfolgt dabei die Veränderung der Sendeenergie des Bereichsabgrenzungssignals 13a, 13b durch Vergrößern von dessen Intensität. Anschließend wertet dann die zweite Einrichtung 5 diese so gesendeten Bereichsabgrenzungssignale 13a, 13b zeitlich und/oder quantitativ zur Bestimmung des Standorts aus.

Wird beispielsweise der linke Türgriff 16a betätigt, so wird die Sendeenergie für den linken Sender 24a vergrößert, womit das in Fig. 4 gestrichelt eingezeichnete Feld 28" resultiert. Für die zweite Einrichtung 5''' ist dann das RSSI-Signal RSSI(links) wieder größer als der Schwellwert S, womit die Bedingung
RSSI(links) > S und RSSI(rechts) <= S
erfüllt ist, so daß die Öffnung der Autotüren 6 von der ersten Einrichtung 4 nach erfolgreicher Authentikation ausgelöst werden kann. Würde jedoch der rechte Türgriff 16b betätigt, so würde zwar das vergrößerte rechte Feld 29" ausgestrahlt werden. Jedoch wäre dann weiterhin das RSSI-Signal RSSI(links) kleiner als der Schwellwert, also
RSSI(links) <= S
womit aufgrund der Bedienung an der rechten Seite des Kraftfahrzeugs 1 keine Öffnung der Autotüren 6 von der ersten Einrichtung 4 vorgenommen wird. Folglich ist die sichere Links-/Rechts-Erkennung der zweiten Einrichtung 5 mit der bedienungsabhängigen Auslösung von Funktionen des Schließsystems 3 ermöglicht.

Wie man anhand der obigen Beschreibung sieht, werden die RSSI-Signale RSSI(links), RSSI(rechts) der Bereichsabgrenzungssignale 13a, 13b jeweils miteinander und/oder mit dem Schwellwert S verglichen. Desweiteren sind lediglich logische, nämlich boole'sche Verknüpfungen der Ergebnisse dieser Vergleiche notwendig, womit der Standort der zweiten Einrichtung 5 sich in einfacher Art und Weise bestimmen läßt.

Die Erfindung ist nicht auf das beschriebene und dargestellte Ausführungsbeispiel beschränkt. So kann nicht nur, wie beschrieben eine Veränderung der Sendeenergie vorgenommen werden, es ist vielmehr auch eine Veränderung der Leistung, der Codierung, der Frequenz, der Modulation o. dgl. für das Bereichsabgrenzungssignal möglich. Die Erfindung umfaßt weiterhin auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

### Bezugszeichen-Liste:

- 1:: Kraftfahrzeug
- 2:: (berechtigter) Benutzer
- 3:: Schließsystem
- 4:: erste Einrichtung
- 5:: zweite Einrichtung
- 5',5",:
- 5''':: zweite Einrichtung (an verschiedenen Positionen)
- 6:: Autotüre
- 7:: Signal
- 8:: Winkbereich
- 9:: Zündschloß
- 10:: Lenkradverriegelung
- 11:: Start/Stop-Schalter
- 12:: (erstes) Signal/Wecksignal
- 13:: (drittes) Signal / Bereichsabgrenzungssignal
- 13a:: Teilsignal (des dritten Signals vom linken Türbereich)
- 13b:: Teilsignal (des dritten Signals vom rechten Türbereich)
- 14:: (viertes) Signal / Rückantwortsignal
- 15:: (fünftes) Signal / (codiertes) Betriebssignal
- 16:: Türgriff / Betätigungsorgan
- 16a:: linker Türgriff / Betätigungsorgan
- 16b:: rechter Türgriff/Betätigungsorgan
- 17:: Sender/Empfänger (in der zweiten Einrichtung)
- 18:: Logikschaltung / Mikroprozessor
- 19:: Mittel zur Messung der Feldstärke / RSS-Chip
- 20:: Eingang (von RSS-Chip)
- 21:: RSSI-Ausgang (an RSS-Chip)
- 22:: Innenraum (vom Kraftfahrzeug)
- 23:: Außenraum (vom Kraftfahrzeug)
- 24:: Sender/Empfänger (in der ersten Einrichtung)
- 24a:: Sender (im linken Türbereich)
- 24b:: Sender (im rechten Türbereich)
- 24c:: Sender (im Heckbereich)
- 25:: Schalter (im Türgriff)
- 26:: (Näherungs)Sensor (im Türgriff)
- 27:: (zweites) Signal / Selektionssignal
- 28,28':: Feld (von linkem Sender)
- 28":: vergrößertes Feld (von linkem Sender)
- 29,29':: Feld (von rechtem Sender)
- 29":: vergrößertes Feld (von rechtem Sender)

## Patentansprüche

1. Schließsystem, insbesondere für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre oder des Motorsteuergeräts, und mit einer zugehörigen, in der Art eines elektronischen Schlüssels, eines ID-Gebers, oder einer Chipkarte ausgebildeten zweiten Einrichtung (5), wobei die beiden Einrichtungen (4, 5) zu deren bestimmungsgemäßen Betrieb Sender und/oder Empfänger (24, 17) für elektromagnetische Signale (7) besitzen, wobei wenigstens zwei Bereichen des Kraftfahrzeugs (1) ein Sender (24a, 24b) der ersten Einrichtung (4) zugeordnet ist, wobei jedem dieser Bereiche des Kraftfahrzeugs (1) ein Betätigungsorgan (16a, 16b) zur Auslösung eines der Signale (7) der ersten Einrichtung (4) zugeordnet ist, wobei die erste Einrichtung (4) ein erstes elektromagnetisches Signal (12) für die zugehörige zweite Einrichtung (5) als Wecksignal sendet, derart daß die zweite Einrichtung (5) aus einem Ruhezustand mit verringertem Energiebedarf in einen aktivierten Zustand für den bestimmungsgemäßen Betrieb übergeführt wird, wobei die erste Einrichtung (4) nach Aussenden des ersten elektromagnetischen Signals (12) ein drittes elektromagnetisches Signal (13) als Bereichsabgrenzungssignals sendet, derart daß die zweite Einrichtung (5) deren Standort in Bezug auf die erste Einrichtung (4) am und/oder im Kraftfahrzeug (1) bestimmt und wobei die Sender (24a, 24b) der Bereiche jeweils ein Bereichsabgrenzungssignal (13a, 13b) senden, **dadurch gekennzeichnet, daß** das Bereichsabgrenzungssignal (13a, 13b) desjenigen Senders (24a, 24b) verändert wird, der dem Bereich zugeordnet ist, an dem die Betätigung des Betätigungsorgans (16a, 16b) erfolgt ist.

2. Schließsystem nach Anspruch 1, **dadurch gekennzeichnet, daß** die Veränderung des Bereichsabgrenzungssignals (13a, 13b) durch Veränderung der Sendeenergie, der Leistung, der Codierung, der Frequenz, der Modulation o. dgl. erfolgt, wobei insbesondere die Veränderung der Sendeenergie des Bereichsabgrenzungssignals (13a, 13b) durch Vergrößern von dessen Intensität erfolgt.

3. Schließsystem nach Anspruch 1 oder 2, **dadurch gekennzeichnet, daß** die zweite Einrichtung (5) die Bereichsabgrenzungssignale (13a, 13b) zeitlich und/oder quantitativ zur Bestimmung des Standorts auswertet, daß vorzugsweise in der zweiten Einrichtung (5) ein Mittel (19) zur Messung der Feldstärke (F) des von der ersten Einrichtung (4) übertragenen Bereichsabgrenzungssignals (13a, 13b) angeordnet ist, und daß weiter vorzugsweise die Standortbestimmung anhand der gemessenen Intensitäten der Bereichsabgrenzungssignale (13a, 13b) erfolgt.

4. Schließsystem nach Anspruch 1, 2 oder 3, **dadurch gekennzeichnet, daß** das Mittel (19) zur Messung der Feldstärke (F), das insbesondere als integrierter Baustein ausgestaltet ist, ein in funktioneller Abhängigkeit, beispielsweise proportional oder logarithmisch, zur Feldstärke (F) stehendes RSSI(Radio Signal Strength Indicator)-Signal erzeugt, daß vorzugsweise das RSSI-Signal (RSSI(links, RSSI(rechts)) in der zweiten Einrichtung (5), insbesondere in einem Mikroprozessor (18), weiterverarbeitet wird, und daß weiter vorzugsweise ein Schwellwert (S) in der zweiten Einrichtung (5) festgelegt ist, derart daß die RSSI-Signale (RSSI(links, RSSI(rechts)) der Bereichsabgrenzungssignale (13a, 13b) jeweils miteinander und/oder mit dem Schwellwert (S) verglichen sowie mittels logischer, insbesondere boole'scher Verknüpfungen der Ergebnisse dieser Vergleiche der Standort bestimmt wird.

5. Schließsystem nach einem der Ansprüche 1 bis 4, **dadurch gekennzeichnet, daß** die zweite Einrichtung (5) dem ersten Signal (12) und/oder dem dritten Signal (13) nachfolgend ein den Standort beinhaltendes weiteres, insbesondere viertes Signal (14) zur ersten Einrichtung (4) sendet, daß vorzugsweise ein fünftes elektromagnetisches Signal (15) zwischen der zweiten Einrichtung (5) und der ersten Einrichtung (4) als ein codiertes Betriebssignal (15) zur Authentikation der zweiten Einrichtung (5) übertragen wird, so daß nach positiver Auswertung des übertragenen Betriebssignals (15) bei berechtigter zweiter Einrichtung (5) eine Änderung des Zustandes der ersten Einrichtung (4) bewirkbar ist, wobei das der Authentikation dienende fünfte elektromagnetische Signal (15) bevorzugterweise in einer bidirektionalen Kommunikation bestehend aus mehreren Teilsignalen zwischen der ersten und der zweiten Einrichtung (4, 5) übertragen wird, und daß weiter vorzugsweise die erste Einrichtung (4) zwischen dem ersten und dem dritten Signal (12, 13) ein zweites elektromagnetisches Signal (27) zur zweiten Einrichtung (5) als Selektionssignal sendet, wobei insbesondere das zweite Signal (27) eine Information über die Identität des Kraftfahrzeugs (1) enthält, derart daß zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

6. Schließsystem nach einem der Ansprüche 1 bis 5, **dadurch gekennzeichnet, daß** die Trägerwelle für das erste Signal (12) und/oder das dritte Signal (13) und/oder Teilsignale (13a, b) des dritten Signals (13) eine im induktiven, niederfrequenten (NF) Bereich liegende Frequenz, die insbesondere in etwa 20 kHz beträgt, aufweist.

7. Schließsystem nach einem der Ansprüche 1 bis 6, **dadurch gekennzeichnet, daß** die erste Einrichtung (4) zwei induktive Sender (24a, 24b) beziehungsweise als induktive Sender dienende Spulen besitzt, wobei insbesondere ein induktiver Sender (24a) der linken Kraftfahrzeugseite sowie ein weiterer induktiver Sender (24b) der rechten Kraftfahrzeugseite zugeordnet sind, und daß die zweite Einrichtung (5) einen induktiven Empfänger (17) besitzt.

8. Schließsystem nach einem der Ansprüche 1 bis 7, **dadurch gekennzeichnet, daß** im Türgriff (16) o. dgl. des Kraftfahrzeugs (1) ein durch den Benutzer (2) manuell betätigbarer Schalter (25) und/oder beispielsweise kapazitiv arbeitender Näherungssensor (26) zum Auslösen des Signals (7) für die Zugangsberechtigung zum Kraftfahrzeug (1) angeordnet ist.

9. Schließsystem nach einem der Ansprüche 1 bis 8, **dadurch gekennzeichnet, daß** am Gangwahlhebel, am Zündschloß (9), im Armaturenbrett, in der Mittelkonsole o. dgl. ein durch den Benutzer manuell betätigbarer Start/Stop-Schalter (11) zum Auslösen des Signals (7) für die Fahrberechtigung des Kraftfahrzeugs (1) angeordnet ist.

## Claims

1. Locking system, in particular for the authorisation of access to and/or driving of a motor vehicle (1) in the form of a keyless entry/go functionality, with a first device (4) designed as a control device that has at least two functional states, such as a control device for unlocking and/or locking the vehicle doors (6), the ignition lock (9), the steering wheel lock (10), for releasing and/or locking the drive lock or engine control device, and with an associated second device (5) designed in the form of an electronic key, an ID transmitter or a chipcard, wherein the two devices (4, 5) for their prescribed operation comprise transmitters and/or receivers (24, 17) for electromagnetic signals (7), wherein a transmitter (24a, 24b) of the first device (4) is allocated to at least two areas of the motor vehicle (1), wherein to each of these areas of the motor vehicle (1) an actuating member (16a, 16b) is allocated for triggering one of the signals (7) of the first device (4), wherein the first device (4) sends a first electromagnetic signal (12) for the allocated second device (5) as an alarm signal, in such a way that the second device (5) is moved from a position of rest with a reduced energy requirement to an activated state for the prescribed operation, wherein the first device (4) after emitting the first electromagnetic signal (12) sends a third electromagnetic signal (13) as an area delimitation signal, such that the second device (5) determines its position in relation to the first device (4) on and/or in the motor vehicle (1), and wherein the transmitters (24a, 24b) of the areas send to the respective areas an area delimitation signal (13a, 13b), **characterised in that** the area delimitation signal (13a, 13b) of the respective transmitter (24a, 24b) allocated to the area is changed, at which the actuating member (16a, 16b) is activated.

2. Locking system according to claim 1, **characterised in that** the area delimitation signal (13a, 13b) is changed by changing the transmission power, the output, the coding, the frequency, the modulation or the like, wherein in particular the transmission power of the area delimitation signal (13a, 13b) is changed by increasing its intensity.

3. Locking system according to claim 1 or 2, **characterised in that** the second device (5) evaluates the area delimitation signals (13, 13b) temporally and/or quantitatively to determine the location, so that preferably in the second device (5) means (19) are arranged for measuring the field strength (F) of the area delimitation signal (13a, 13b) transmitted by the first device (4), and **in that** also preferably the location is determined by way of the measured intensities of the area delimitation signals (13a, 13b).

4. Locking system according to claim 1, 2 or 3, **characterised in that** means (19) for measuring the field strength (F), which are preferably designed as an integrated component, generate an RSSI (Radio Signal Strength Indicator) signal that is functionally dependent, for example proportionally or logarithmically, on the field intensity (F), **in that** preferably the RSSI signal (RSSI (left, RSSI (right)) is processed in the second device (5), in particular in a microprocessor (18), and **in that** also preferably a threshold value (S) is determined in the second device (5) so that the RSSI-signals (RSSI(left, RSSI(right)) of the area delimitation signals (13a, 13b) are compared respectively with one another and/or with the threshold value (S), and are determined by means of logical, in particular Boolean operations of the results of these comparisons of location.

5. Locking system according to one of claims 1 to 4, **characterised in that** the second device (5) following the first signal (12) and/or the third signal (13) sends an additional, in particular fourth signal (14) containing the location to the first device (4), **in that** preferably a fifth electromagnetic signal (15) is transferred between the second device (5) and the first device (4) as a coded operating signal (15) for the authentication of the second device (5), so that after a positive evaluation of the transmitted operating signal (15) with an authorised second device (5) a change can be effected in the state of the first device (4), wherein the fifth electromagnetic signal (15) used for the authentication is transmitted preferably in bidirectional communication consisting of several part signals between the first and the second device (4, 5), and **in that** also preferably the first device (4) between the first and the third signal (12, 13) sends a second electromagnetic signal (27) to the second device (5) as a selection signal, whereby in particular the second signal (27) contains information about the identity of the motor vehicle (1), such that second devices (5) belonging to the first device (4) remain in the activated state and non-allocated second devices in the activated state are returned to a position of rest.

6. Locking system according to one of claims 1 to 5, **characterised in that** the carrier wave for the first signal (12) and/or the third signal (13) and/or part signals (13a, b) of the third signal (13) has a frequency which is in an inductive, low frequency (NF) range, which is in particular about 20 kHz.

7. Locking system according to one of claims 1 to 6, **characterised in that** the first device (4) has two inductive transmitters (24a, 24b) or coils acting as inductive transmitters, whereby in particular an inductive transmitter (24a) is allocated to the left motor vehicle side and a further inductive transmitter (24b) is allocated to the right motor vehicle side, and **in that** the second device (5) has an inductive receiver (17).

8. Locking system according to one of claims 1 to 7, **characterised in that** in the door handle (16) or the like of the motor vehicle (1) a switch (25) that is activated manually by the user (2) and/or for example a capacitively operating proximity sensor (26) is arranged for triggering the signal (7) for the authorisation of access to the motor vehicle (1).

9. Locking system according to one of claims 1 to 8, **characterised in that** on the gear lever, the ignition lock (9), the instrument panel, the central console or the like a start/stop switch (11) that is manually operated by the user is arranged for triggering the signal (7) for the drive authorisation of the motor vehicle (1).

## Revendications

1. Système de fermeture, notamment pour l'autorisation d'accès et/ou de conduite d'un véhicule (1) à fonctionnalité de type entrée sans clé/marche, ayant une première installation (4) réalisée comme installation de commande à au moins deux états, telle qu'une installation de commande pour déverrouiller et/ou verrouiller les portières d'un véhicule (6), la serrure d'allumage (9), le verrouillage du volant de direction (10), pour libérer et/ou bloquer le verrou d'immobilisation ou l'appareil de commande du moteur et une seconde installation (5) correspondante, de type clé électronique, capteur ID ou carte à puce,
les deux installations (4, 5) ayant des émetteurs et/ou récepteurs (24, 17) pour des signaux électromagnétiques (7) pour leur fonctionnement tel que défini,
au moins un émetteur (24a, 24b) de la première installation (4) étant associé à au moins deux zones du véhicule automobile (1), chacune de ces zones du véhicule automobile (1) ayant un organe d'actionnement (16a, 16b) pour déclencher l'un des signaux (7) de la première installation (4),
la première installation (4) émettant un premier signal électromagnétique (12) comme signal de réveil de la seconde installation (5) correspondante de façon que la seconde installation (5) passe d'un état de repos à faible consommation d'énergie dans un état activé pour le fonctionnement tel que défini,
la première installation (4) après émission du premier signal électromagnétique (12) émet un troisième signal électromagnétique (13) comme signal de délimitation de zone de façon que la seconde installation (5) dont la position est définie par rapport à la première installation (4) dans et/ ou sur le véhicule automobile (1), et
les émetteurs (24a, 24b) envoyant aux zones chaque fois un signal de délimitation de zone (13a, 13b),
**caractérisé en ce qu'**
on change le signal de délimitation de zone (13a, 13b) de celui des émetteurs (24a, 24b) auquel est associée la zone où se fait l'actionnement de l'organe d'actionnement (16a, 16b).

2. Système de fermeture selon la revendication 1,
**caractérisé en ce que**
la variation du signal de délimitation de zone (13a, 13b) se fait par variation de l'énergie d'émission, de la puissance, du codage, de la fréquence, de la modulation ou autre moyen analogue et notamment la variation de l'énergie d'émission du signal de délimitation de zone (13a, 13b) se fait par augmentation de son intensité.

3. Système de fermeture selon la revendication 1 ou 2,
**caractérisé en ce que**
la seconde installation (5) exploite les signaux de délimitation de zone (13a, 13b) dans le temps et/ou quantitativement pour déterminer l'emplacement,
de préférence la seconde installation (5) comporte des moyens (19) pour mesurer l'intensité (F) du champ du signal de délimitation de zone (13a, 13b) transmis par la première installation (4) et
en outre, de préférence on détermine l'emplacement à l'aide des intensités mesurées des signaux de délimitation de zone (13a, 13b).

4. Système de fermeture selon la revendication 1, 2 ou 3,
**caractérisé en ce que**
le moyen (19) pour mesurer l'intensité de champ (F), réalisé notamment comme composant intégré, génère un signal RSSI (Indicateur de Puissance de Signal Radio) en relation fonctionnelle, par exemple en fonction proportionnelle ou logarithmique avec de l'intensité du champ (F), de préférence le signal RSSI (RSSI(gauche), RSSI(droit)) sont traités ensuite dans la seconde installation (5), notamment dans un microprocesseur (18) et
en outre, de manière préférentielle, un seuil (S) est fixé dans la seconde installation (5) de façon que les signaux RSSI (RSSI(gauche, RSSI(droite)) des signaux de délimitation de zone (13a, 13b) soient chaque fois comparés entre eux et/ou avec le seuil (S) et par des combinaisons logiques, notamment en combinant en logique de Boole les résultats de ces comparaisons, on détermine l'emplacement.

5. Système de fermeture selon l'une des revendications 1 à 4,
**caractérisé en ce que**
la seconde installation (5) émet un autre signal, notamment un quatrième signal (14) vers la première installation (4), à la suite du premier signal (12) et/ou du troisième signal (13) et qui contient l'emplacement, on transmet de préférence un cinquième signal électromagnétique (15) entre la seconde installation (5) et la première installation (4) comme signal de fonctionnement codé (15) pour authentifier la seconde installation (5) de façon qu'après une exploitation positive du signal de fonctionnement transmis (15), avec autorisation de la seconde installation (5) on modifie l'état de la première installation (4), le cinquième signal électromagnétique (15) servant d'authentification, étant transmis de préférence par une communication bidirectionnelle composée de plusieurs signaux partiels échangés entre la première et la seconde installation (4, 5) et **en ce qu'**en outre de manière préférentielle, la première installation (4) émet entre le premier et le troisième signal (12, 13) un second signal électromagnétique (27) vers la seconde installation (5) comme signal de sélection,
notamment le signal (27) contient une information concernant l'identité du véhicule automobile (1) de façon à laisser à l'état activé les secondes installations (5) appartenant à la première installation (4), et à remettre les secondes installations non correspondantes, à l'état activé pour les faire passer à l'état de repos.

6. Système de fermeture selon l'une des revendications 1 à 5,
**caractérisé en ce que**
l'onde porteuse du premier signal (12) et/ou du troisième signal (13) et/ou des signaux partiels (13a, 13b) du troisième signal (13) a une fréquence inductive, dans la plage des basses fréquences (NF), notamment d'environ 20 kHz.

7. Système de fermeture selon l'une des revendications 1 à 6,
**caractérisé en ce que**
la première installation (4) comporte deux inducteurs inductifs (24a, 24b) ou des bobines servant d'émetteurs inductifs, et notamment un émetteur inductif (24a) est associé au côté gauche du véhicule et un autre émetteur inductif (24b) est associé au côté droit du véhicule et la première installation (5) possède un récepteur inductif (17).

8. Système de fermeture selon l'une des revendications 1 à 7,
**caractérisé en ce que**
la poignée de porte (16) ou un moyen analogue du véhicule automobile (1) comporte un commutateur (25) actionné manuellement par l'utilisateur (2) et/ou par exemple un capteur de proximité (26) à fonctionnement capacitif pour déclencher le signal (7) pour l'autorisation d'accès au véhicule automobile (1).

9. Système de fermeture selon l'une des revendications 1 à 8,
**caractérisé en ce que**
le levier de vitesse, la serrure d'allumage (9), le tableau de bord, la console centrale ou analogue comportent un commutateur marche/arrêt (11) à commande manuelle par l'utilisateur pour déclencher le signal (7) d'autorisation de conduite du véhicule (1).
